# EUROPÄISCHE PATENTSCHRIFT

(11) **EP 1 185 881 B1**
(45) Veröffentlichungstag und Bekanntmachung des Hinweises auf die Patenterteilung: **29.12.2004**
(21) Anmeldenummer: 00945605.4
(22) Anmeldetag: 09.06.2000
(51) Int. Cl.: G01S 13/18, G01S 7/40

(54) **ENTFERNUNGSMESSEINRICHTUNG UND VERFAHREN ZUM KALIBRIEREN EINER ENTFERNUNGSMESSEINRICHTUNG**
DISTANCE MEASURING DEVICE AND METHOD FOR CALIBRATING A DISTANCE MEASURING DEVICE
DISPOSITIF TELEMETRIQUE ET PROCEDE POUR LE CALIBRAGE D'UN DISPOSITIF TELEMETRIQUE

(30) Priorität: 11.06.1999 DE 19926787
(43) Veröffentlichungstag der Anmeldung: 13.03.2002
(73) Patentinhaber: S.M.S. Smart Microwave Sensors GmbH, 38106 Braunschweig (DE)
(72) Erfinder: MENDE, Ralph, D-38106 Braunschweig (DE); ROHLING, Hermann, D-38304 Wolfenbüttel (DE)
(74) Vertreter: Lins, Edgar, Dipl.-Phys. Dr.jur.
(86) Internationale Anmeldenummer: PCT/DE2000/001856
(87) Internationale Veröffentlichungsnummer: WO 2000/077542

(56) Entgegenhaltungen:
- EP-A- 0 473 082
- WO-A-94/24580
- CH-A- 652 832

## Beschreibung

Die Erfindung betrifft ein Verfahren zum Kalibrieren einer Entfernungsmesseinrichtung, bei der ein Sendeteil für elektromagnetische Strahlung, insbesondere Radarstrahlung, durch einen Impulsgenerator gesteuerte Messimpulse aussendet und ein Empfangsteil nach einer bestimmten einstellbaren verzögerungszeit vor der Aussendung eines nächsten Messimpulses zum Empfang eines Echoimpulses während eines Zeittores empfangsbereit geschaltet wird.

Die Erfindung betrifft ferner eine Entfernungsmesseinrichtung mit einem Sendeteil für elektromagnetische Strahlung, insbesondere Radarstrahlung, das einen Impulsgenerator zur Erzeugung von Messimpulsen und eine Sendeantenne aufweist und einem Empfangsteil, das eine Empfangsantenne und eine einstellbare Verzögerungsschaltung zum Einstellen eines Zeittores für den Empfang von Echoimpulsen vor der Aussendung eines nächsten Messimpulses durch das Sendeteil aufweist.

Entfernungsmeßeinrichtungen, die zur Erkennung von Entfernungen und Relativgeschwindigkeiten geeignet sind, werden insbesondereals Nahbereichs-Radarsysteme für Automobile vorgesehen. Hierzu wird eine Anzahl von Einzelsensoren an geeigneten Stellen ringsum das Automobil angeordnet. Anstelle von Radarsendern können auch andere Sender elektromagnetischer Wellen, beispielsweise Laser, verwendet werden.

Die Einzelsensoren werden entweder durch eine bzw. wenige zentrale Steuereinheiten oder durch eine separate Steuerund Auswerteeinheit an jedem Einzelsensor gesteuert. Diese Einheiten übernehmen die Aufgaben der Ansteuerung, der Überwachung und der Signalauswertung.

Eine wünschenswerte Entfernungsauflösung ist beispielsweise 10 cm. Derartige Entfernungsauflösungen lassen sich bei einem Meßbereich von 30 m mit kontinuierlich ausstrahlenden Radaren bei Einhaltung der gesetzlichen Bestimmung über die Vergabe von Frequenzen normalerweise nicht erzielen. Es ist daher beispielsweise durch WO98/04930 Al bekannt, Pulsradare zu verwenden, die sehr kurze Impulse (beispielsweise τ = 333 ps) aussenden, die Pulswiederholfrequenz liegt üblichweise bei Werten von etwa 5 MHz, was einer Periode von 200 ns und somit einem Eindeutigkeitsbereich von 30 m zwischen zwei Meßimpulsen entspricht. Dabei wird die Entfernungsmessung dadurch vorgenommen, dass im Empfangsteil ein Entfernungstor gebildet wird, dessen zeitliche Lage durch eine elektronisch steuerbare Verzögerungsschaltung einstellbar ist. Messtechnisch kann dabei prinzipiell jeweils nur ein Zeittor erfasst werden. Das zu vermessende Zeittor ist durch seine Breite und seine Lage auf der Zeitachse charakterisiert. Die Breite des Zeittores wird meist gleich der Impulsbreite der Messimpulse gewählt. Die Lage auf der Zeitachse kann durch die Verzögerungsschaltung eingestellt werden.

Für die Dauer eines gewissen Zeitraumes kann dabei die Steuerspannung, mit deren Hilfe die Verzögerungsschaltung eingestellt wird, konstant sein bzw. sich nur in einem sehr kleinen Spannungsintervall bewegen, sodass auf der Zeitachse eine Messdauer für ein Zeittor realisiert wird, die deutlich länger ist als die Zeitdauer zwischen zwei Messimpulsen. So kann beispielsweise bei der Erfassung eines Bereichs von 25,6 m und einer der Entfernungsauflösung von 10 cm entsprechenden Zeittorbreite bei der Realisierung von 256 Toren jedes Zeittor für einen Zeitraum von jeweils 100 µs geöffnet werden. Die Messdauer für den gesamten erfassten Bereich beträgt dabei insgesamt 25,6 ms. In allen 256 Zeitabschnitten findet nacheinander eine Integration des Empfangssignals jeweils eines Zeittores statt. Dabei kann ein integrierendes Tiefpassfilter im Basisband zur Anwendung kommen. Dabei wird stets nur das Signal aus dem durch die Verzögerungsschaltung vorgegebenen Zeitbereich integriert. Durch die Integration der Echosignale, die in das Empfangszeittor fallen (im Beispiel 500) kann das Signal-Rauschverhältnis am Ausgang des Tiefpaßfilters deutlich besser sein als am Eingang. Zur Vermessung des gesamten Entfernungsbereichs wird die Verzögerungsschaltung vom kleinsten zum größten Wert oder umgekehrt verstellt.

Die Genauigkeit, mit der die Verzögerungsschaltung eingestellt werden kann, bestimmt erkennbar die Entfernungsmessgenauigkeit. Für die Bestimmung des Winkels, unter dem ein Objekt in der Nähe des Fahrzeugs erkannt werden kann, ist die Vermessung dieses Objektes mit mindestens zwei Einzelsensoren notwendig. Der Winkelwert kann dann durch Auswertung der gemessenen Einzelentfernungen mit Hilfe der Triangulation gewonnen werden. Entscheidend für die Winkelmessgenauigkeit ist daher ebenfalls die in den Einzelsensoren erzielbare Messgenauigkeit für die Entfernungsmessung.

Wegen der stets vorhandenen Toleranzen der analogen Schaltungselemente, die bei der Erzeugung der elektronischen Verzögerung auftreten, kann typisch nur eine Genauigkeit von ca. 1 % bei der Verzögerungseinstellung und damit bei der Entfernungsmessung erzielt werden. Ursache für die Toleranzen sind Bauelementeschwankungen, Temperatureffekte und Alterungseffekte.

Bei der genauen Vermessung der durch das Auftragen der Steuerspannung für die Verzögerungsschaltung und die damit eingestellte sensible Entfernung wird eine Kennlinie gewonnen, die von Einzelsensor zu Einzelsensor nicht exakt reproduzierbar ist. Eine Softwarekompensation der jeweiligen Kennlinienfehler scheidet daher für eine Serienfertigung aus. Eine höhere Messgenauigkeit ist daher bisher nur durch eine Einzelvermessung zu erreichen, mit der jedoch Fehler durch Temperaturveränderungen oder Alterung nicht erfasst werden können.

Durch die DE-OS 2 002 681 ist ein Radar-Entfernungsmesssystem bekannt, das eine selbsteichende Betriebsweise ermöglicht. In dieser Betriebsweise wird über eine Verzögerungsleitung ein verzögerter Impuls ausgesandt, der über eine Dämpfungseinrichtung unmittelbar auf den Empfänger geleitet wird. Im Empfänger wird mit jedem Impuls eines Impulsgenerators eine Messschaltung für die Zeit bis zum Empfang eines Echosignals gestartet, die beispielsweise aus einem Sägezahngenerator bestehen kann. Wird das Echosignal empfangen, wird die momentane Spannung als Maß für die seit dem Aussenden des Messimpulses vergangenen Zeit - und damit als Maß für die Entfernung - ausgewertet. Der während des Kalibrierbetriebs verzögert ausgesandte Impuls gelangt als simuliertes Echosignal auf die Empfangsschaltung. Der Messwert für die seit der Impulsauslösung vergangenen Zeit wird mit einem Referenzwert verglichen. In einer weiteren Ausbildung dieser Vorrichtung können sowohl die Verzögerungen als auch die Dämpfungen in Abhängigkeit von dem aktuellen Messbereich umgeschaltet werden, um die Kalibrierung für den aktuellen Messbereich zu erhalten. Eine Kalibrierung, die Messabweichungen durch Temperaturänderungen, Alterung, Bauelementtoleranzen o.dgl. ausgleichen kann, ist durch die bekannte Anordnung nicht möglich, da die Verzögerungsschaltungen und ggf. auch die Testsignalquellen selbst temperatur-, alterungs- und toleranzabhängig sein können.

Durch die US 3,278,935 ist ein Radartestgerät bekannt, bei dem Radarziele simuliert werden. Hierzu wird aus einem ausgesandten Sendeimpuls ein Nachhallsignal, das aus gleich beabstandeten Impulsen mit abnehmender Amplitude besteht. Auf diese Weise werden Radarziele simuliert, die einen festen vorgegebenen Abstand voneinander aufweisen. Hierdurch ist die Wiedergabe von Radarzielen, beispielsweise auf einem Radarschirm, kalibrierbar, weil zwischen den simulierten Radarzielen ein jeweils gleicher Abstand bestehen muss. Der vorliegenden Erfindung liegt die Problemstellung zugrunde, eine höhere Messgenauigkeit für Radar-Entfernungsmesseinrichtungen zu ermöglichen, wobei Abweichungen durch Bauelementtoleranzen, Temperaturänderungen und Alterung erfassbar sind und kein hoher Einzelvermessungsaüfwand erforderlich ist.

Ausgehend von dieser Problemstellung ist erfindungsgemäß das eingangs erwähnte Verfahren zum Kalibrieren einer Entfernungsmesseinrichtung dadurch gekennzeichnet, dass der Impulsgenerator Impulse mit einem Vielfachen der Impulswiederholfrequenz der Messimpulse produziert, dass in größeren Zeitabständen ein Kalibrierzyklus durchgeführt wird, indem mit vom Impulsgenerator erzeugten Impulsen gesteuert von dem Sendeteil Kalibrierimpulse produziert werden, dass die Kalibrierimpulse unmittelbar im Empfangsteil empfangbar sind und dass die Verzögerungszeit im Empfangsteil so eingestellt wird, dass ein generierter Kalibrierimpuls unmittelbar während eines Zeittores vom Empfangsteil empfangen wird.

Ausgehend von der genannten Problemstellung ist ferner eine Entfernungsmesseinrichtung der eingangs erwähnten Art dadurch gekennzeichnet, dass der Impulsgenerator Impulse mit einer Wiederholfrequenz erzeugt, die einem Vielfachen der Impulswiederholfrequenz der Messimpulse entspricht, dass in einem in größeren Zeitabständen eingeschalteten Kalibrierzyklus mit Impulsen des Impulsgenerators gesteuert durch das Sendeteil Kalibrierimpulse produzierbar sind, dass durch eine Kurzschlusskopplung die Kalibrierimpule von dem Empfangsteil unmittelbar empfangbar sind und dass eine Auswertungseinrichtung für die zeitliche Übereinstimmung von Zeittor und Kalibrierimpuls vorgesehen ist.

Die Erfindung beruht auf der Idee, die zeitliche Genauigkeit der Bildung von Impulsen durch den Generator, beispielsweise durch einen Quarzgenerator, für die selbsttätige und ständig zu wiederholende Kalibrierung der Verzögerungsschaltung im Empfangsteil zu verwenden. Hierzu werden im Kalibrierzyklus Kalibrierimpulse erzeugt, die zwischen den Messimpulsen liegen. In einfacher Weise ist die Erzeugung von derartigen Kalibrierimpulsen durch eine Vervielfachung der Frequenz des die Messimpulse erzeugenden Generators möglich. Durch eine Verzehnfachung der Impulswiederholfrequenz des Generators werden daher neun Zwischenimpulse zwischen zwei Messimpulsen erzeugt, die einen definierten zeitlichen Abstand zu dem vorhergehenden Messimpuls aufweisen. Da im Empfangsteil nur der Messimpuls wirksam wird und die Kalibrierimpulse nur für das Sendeteil verwendet werden, wird im Empfangsteil durch den Messimpuls und die Verzögerungsschaltung ein Zeittor gebildet, das mit einem unmittelbar in den Empfangsteil eingekoppelten Kalibrierimpuls des Sendeteils mehr oder weniger zusammenfallen kann. Durch die Ansteuerung der Verzögerungsschaltung mit einer Steuerspannung kann die Verzögerung so eingestellt werden, dass das gebildete Zeittor möglichst genau mit einem Kalibrierimpuls zusammenfällt. Auf diese Weise kann die Verzögerungszeit, die einer bestimmten Entfernung entspricht, mit der Genauigkeit des Quarzes des Generators im Sendeteil überprüft und eingestellt werden. Diese Einstellung kann für zeitlich verschiedene Kalibrierimpulse erfolgen, so dass automatisch verschiedene Stützwerte für die Steuerspannungs-Verzögerungszeit-Kennlinie gewonnen werden, mit denen die Kennlinie kalibriert bzw. korrigiert werden kann.

Das erfindungsgemäße Kalibrierverfahren eignet sich insbesondere auch für Radarsysteme, in denen als Messimpulse hochfrequente Signalwellenabschnitte verwendet werden, deren Abschnittsbreite durch die Breite der Impulse eines Generators bestimmt werden.

Es ist dabei möglich, einen Vergleich des Zeittores mit dem den Signalwellenabschnitt begrenzenden Impuls vorzunehmen oder die jeweiligen Signalwellenabschnitte miteinander zu vergleichen, wobei sowohl der Impuls des Generators im Sendeteil als auch das Zeittor im Empfangsteil jeweils einen Signalwellenabschnitt desselben Oszillators durchschalten können.

Die erfindungsgemäße Vervielfachung der Impulswiederholfrequenz des Generators im Sendeteil würde im Normalfall dazu führen, daß Bauelemente verwendet werden müssen, die mit der vervielfachten Frequenz arbeiten können. Dies kann vermieden werden, wenn von der vervielfachten Frequenz jeweils nur ein Kalibrierimpuls verwendet und die übrigen erzeugten Impulse durch eine Maskierungsschaltung abgeblockt werden. Die Maskierungsanordnung erlaubt die Durchschaltung der verschiedenen Kalibrierimpulse nacheinander, so daß die Mehrzahl von Stützwerten für die Kennlinie gewonnen werden kann. Da trotz der Vervielfachung der Impulswiederholfrequenz des Generators immer nur ein Kalibrierimpuls in dem Intervall zwischen zwei Meßimpulsen durchgelassen wird, ist es nicht erforderlich, Bauelemente zu verwenden, die eine erhöhte Schnelligkeit aufweisen müssen. Die Maskierung der nicht durchgelassenen Impulse kann im Sendeteil, aber auch im Empfangsteil erfolgen. Es ist auch möglich, sowohl im Sendeteil als auch im Empfangsteil, ggf. in unterschiedlicher Weise, zu maskieren.

Die Kurzschlußkopplung zwischen Sendeteil und Empfangsteil kann durch die Herstellung entsprechender, ggf. bedämpfter Verbindungsleitungen zwischen Sende- und Empfangsteil realisiert werden. Es ist jedoch auch möglich, eine nicht völlig unterdrückbare Kopplung zwischen Sendeteil und Empfangsteil, beispielsweise eine direkte Kopplung zwischen Sendeantenne und Empfangsantenne oder eine Reflexion an einem Radom, das sich üblicherweise sehr nah vor den Antennen befindet, für die erfindungsgemäße Kalibrierung auszunutzen. In diesem Fall können zusätzliche Bauelemente für die Durchführung der Kurzschlußkopplung entfallen.

Die Erfindung soll im folgenden anhand von in der Zeichnung dargestellten Ausführungsbeispielen näher erläutert werden.
Es zeigen:
- Figur 1 -: ein Blockschaltbild für eine erfindungsgemäße Entfernungsmesseinrichtung, mit der ein Kalibrierzyklus ausführbar ist, gemäß einer ersten Ausführungsform
- Figur 2 -: ein Blockschaltbild für eine erfindungsgemäße Entfernungsmesseinrichtung, mit der ein Kalibrierzyklus ausführbar ist, gemäß einer zweiten Ausführungsform
- Figur 3 -: eine schematische Darstellung der Meßimpulse und Kalibrierimpulse zur Erläuterung des Kalibrierprinzips.

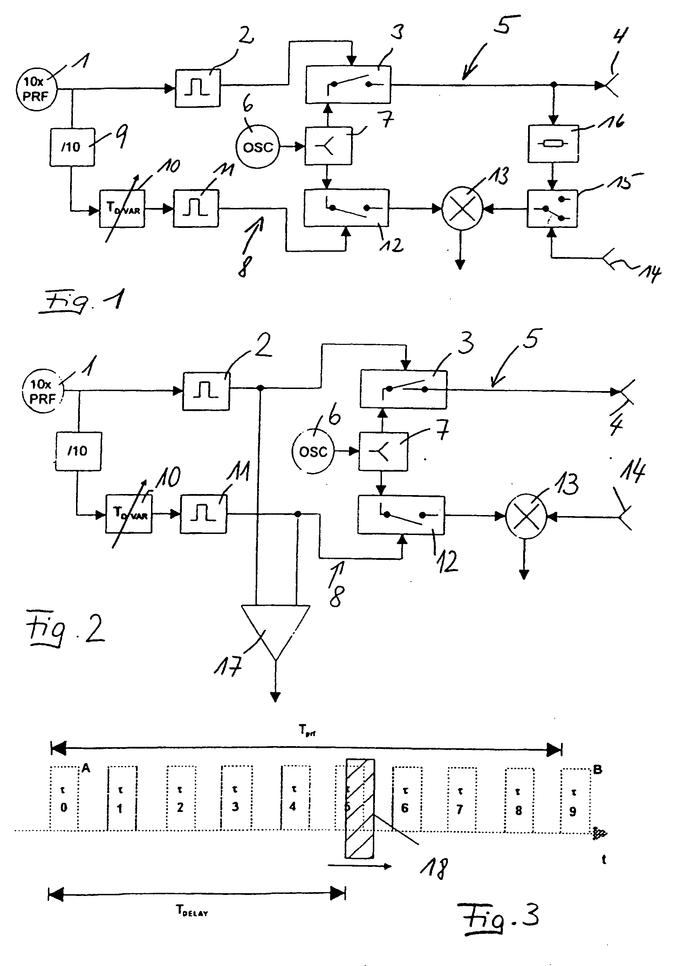

Figur 1 zeigt ein Blockschaltbild, in dem ein Generator 1, ein Impulsformer 2, ein Schalter 3 und eine Sendeantenne 4 einen Sendeteil 5 bilden. Dabei wird der Schalter 3 durch die Impulse des Generators 1, die am Ausgang des Impulsformers 2 anstehen, ein- und ausgeschaltet, so daß während der Pulsdauer eine von einem Oszillator 6 generierte und über eine Gabelung 7 auf den Sendeschalter 3 geleitete Hochfrequenzwelle zur Sendeantenne 4 durchgeschaltet wird.

Ein Empfangsteil 8 erhält das Ausgangssignal des Generators 1 über einen Frequenzteiler 9. Dessen Ausgangssignale gelangen auf eine mit einer Steuerspannung elektronisch einstellbare Verzögerungsschaltung 10. Deren Ausgangsimpulse steuern über einen Impulsformer 11 einen Empfangsschalter 12 ein und aus, so daß die Impulsdauer des durch den Impulsformer 11 geformten Ausgangsimpulses der elektronischen Verzögerungsschaltung 10 ein Zeittor bildet. Während des Zeittores gelangt die Hochfrequenzwelle des Oszillators 6 über die Gabelung 7 und den geschlossenen Schalter 12 auf einen Eingang einer Mischstufe 13. Auf den anderen Eingang der Mischstufe 13 gelangt ein durch eine Empfangsantenne 14 empfangenes Echosignal durch einen Umschalter 15 in seiner Empfangsstellung. Während eines Kalibrierzyklus wird der Umschalter 15 umgeschaltet, so daß der zweite Eingang der Mischstufe 13 dann mit dem Eingang der Sendeantenne 4 über eine Dämpfung 16 verbunden ist. Die Dämpfung 16 und der Umschalter 15 bilden dann eine Kurzschlußkopplung zwischen Sendeteil 5 und Empfangsteil 8.

Im normalen Meßbetrieb sendet der Generator 1 Meßimpulse mit seiner normalen Pulswiederholfrequenz aus. Jeder Meßimpuls wird durch den Impulsformer 2 geformt und bestimmt durch seine Impulsbreite die Einschaltdauer des Sendeschalters 3, so daß während der Impulsbreite eine Hochfrequenzwelle des Oszillators 6 auf die Sendeantenne 4 gelangt. Der Ausgangsimpuls des Generators 1 gelangt für den Meßbetrieb direkt auf den Eingang der elektronischen Verzögerungsschaltung 10, mit der ein Zeittor definiert wird, das einer bestimmten Entfernung entspricht. Während der Dauer des Zeittores gelangt auf den ersten Eingang der Mischstufe 13 die Hochfrequenzwelle des Oszillators 6. Wird innerhalb des Zeittores ein Echosignal von der Empfangsantenne 14 empfangen, bedeutet dies, daß eine Reflexion des Sendesignals an einem Gegenstand in der durch das Zeittor festgelegten Entfernung stattgefunden hat. Das durch die Empfangsantenne 14 empfangene Echosignal gelangt auf den zweiten Eingang der Mischstufe 13. Liegen an beiden Eingängen der Mischstufe 13 gleiche Hochfrequenzwellen an, entsteht ein der Koinzidenz proportionales Ausgangssignal als Meßsignal für die betreffende Entfernung. Liegt an einem Eingang der Mischstufe 13 ein Signal an, an dem anderen jedoch kein Signal, entsteht ein Ausgangssignal Null.

Für die Durchführung eines Kalibrierzyklus erzeugt der Generator 1 Impulse mit einer vielfachen Impulswiederholfrequenz, im dargestellten Ausführungsbeispiel mit der 10fachen Frequenz. Da diese Impulse über einen Frequenzteiler 9, der die Frequenz durch zehn teilt, auf die Verzögerungsschaltung 10 gelangen, wird im Empfangsteil 8 - wie im Meßbetrieb - nur ein Zeittor generiert. Im Sendeteil hingegen entstehen zehn Impulse statt eines Impulses im Meßbetrieb. Demgemäß werden neun Zwischenimpulse als Kalibrierimpulse zwischen den Zeitpunkten der Meßimpulse generiert. Diese gelangen über die Kurzschlußkopplung 16, 15 (nach der Umschaltung des Umschalters 15 auf den Kalibrierbetrieb) auf die Mischstufe 13. Wenn das durch die Verzögerungsschaltung 10 gebildete Zeittor mit einem Kalibrierimpuls zusammenfällt, erzeugt die Mischstufe 13 ein maximales Ausgangssignal. Bei nur teilweiser Übereinstimmung kann eine Nachstellung der Verzögerungsschaltung 10 zur Maximierung des Ausgangssignals der Mischstufe 13 vorgenommen werden, um so die für eine bestimmte, dem betreffenden Kalibrierimpuls entsprechende Entfernung aktuell benötigte Steuerspannung festzustellen. Diese Kalibrierung kann für alle neuen Kalibrierimpulse vorgenommen werden, um so die Stützwerte für die Kennlinie zu ermitteln. Selbstverständlich kann durch eine weitere Erhöhung der Impulswiederholfrequenz des Generators 1 eine noch feinere Unterteilung des Meßintervalls - und damit eine noch genauere Kalibrierung - vorgenommen werden.

Wenn durch die Anordnung von Sendeantenne 4 und Empfangsantenne 14 eine gewisse Überkopplung stattfindet, kann die hierdurch bewirkte Kurzschlußkopplung für die Kalibrierung an der Mischstufe 13 ausgenutzt werden, so daß die Dämpfung 16 und der Schalter 15 entfallen können.

Bei dem in Figur 2 dargestellten Ausführungsbeispiel werden nicht die gebildeten Hochfrequenzwellenabschnitte zur Kalibrierung miteinander verglichen, sondern das durch die Verzögerungsschaltung 10 und den Impulsformer 11 gebildete Zeittor einerseits und der durch den Impulsformer 2 gebildete Ausgangsimpuls des Generators 1 andererseits. Dieser Vergleich ist mit einem niederfrequenten Komparatorverstärker möglich, der ggf. mit einem Integrator kombiniert ist.

Figur 3 zeigt geformte Ausgangsimpulse des Generators 1, die mit der Impulswiederholfrequenz T_{prf} Meßimpulse A, B ... bilden. Durch die Vervielfachung der Impulswiederholfrequenz (hier Faktor 9) entstehen Kalibrierimpulse τ0 ... τ9, die sich an der Position der Meßimpulse A, B, jedoch auch äquidistant in dem Intervall zwischen den Meßimpulsen A, B befinden. In Figur 3 ist schematisch ein Zeittor 18 dargestellt, das durch die in der Verzögerungsschaltung 10 eingestellte Verzögerungszeit T_{DELAY} auf der Zeitachse verschiebbar ist. Vorzugsweise ist die Breite des Zeittores 18 gleich der Breite der Kalibrierimpulse r0 durch die Ausbildung der Impulsformer 2, 11 eingestellt.

Die Kalibrier- bzw. Meßimpulse können beispielsweise durch einen 50 MHz-Quarz mit einem schaltbaren Vorteiler (:10 oder:1) realisert werden. Bei einem üblichen Quarz beträgt die Frequenzabweichung weniger als 100 ppm. Damit bilden die Kalibrierimpulse τ0 bis τ9 eine Zeitbasis mit einer hohen Genauigkeit, die die genaue Kalibrierung der Verzögerungszeit T_{DELAY} in Abhängigkeit von der Steuerspannung der elektronischen Verzögerungsschaltung 10 erlaubt.

Der erfindungsgemäße Kalibrierzyklus kann durch das Programm der Entfernungsmeßeinrichtung in vorgegebenen Abständen wirksam geschaltet werden, um so automatisch immer wieder die Entfernungsmeßeinrichtung zu kalibrieren. Eine Kalibrierung im Abstand von 1 bis 10 s ist regelmäßig ausreichend und trägt auch schnellen Temperaturänderungen Rechnung.

## Patentansprüche

1. Verfahren zum Kalibrieren einer Entfernungsmesseinrichtung, bei der ein Sendeteil (5) für elektromagnetische Strahlung, insbesondere Radarstrahlung, durch einen Impulsgenerator (1) gesteuerte Messimpulse (A, B) aussendet und ein Empfangsteil (8) nach einer bestimmten einstellbaren verzögerungszeit (T_{DELAY}) vor der Aussendung eines nächsten Messimpulses zum Empfang eines Echoimpulses während eines Zeittores (18) empfangsbereit geschaltet wird, **dadurch gekennzeichnet, dass** der Impulsgenerator (1) Impulse mit einem Vielfachen der Impulswiederholfrequenz der Messimpulse produziert, dass in größeren Zeitabständen ein Kalibrierzyklus durchgeführt wird, indem mit vom Impulsgenerator (1) erzeugten Impulsen gesteuert von dem Sendeteil (5) Kalibrierimpulse (τ0 bis τ9) produziert werden, dass die Kalibrierimpulse (τ0 bis τ9) unmittelbar im Empfangsteil (8) empfangbar sind und dass die Verzögerungszeit (T_{DELAY}) im Empfangsteil (8) so eingestellt wird, dass ein generierter Kalibrierimpuls (τ0 bis τ9) unmittelbar während eines Zeittores (18) vom-Empfangsteil (8) empfangen wird.

2. Verfahren nach Anspruch 1, **dadurch gekennzeichnet, dass** im Empfangsteil (8) ein Kalibrierimpuls (τ0 bis τ9) mit dem Zeittor (18) am Ausgang einer Verzögerungsschaltung (10) zeitlich verglichen wird.

3. Verfahren nach Anspruch 1 oder 2, **dadurch gekennzeichnet, dass** die Breite des Zeittores (18) entsprechend der Dauer eines Kalibrierimpulses (τ0 bis τ9) eingestellt wird.

4. Verfahren nach einem der Ansprüche 1 bis 3, **dadurch gekennzeichnet, dass** als Messimpulse (A, B) hochfrequente Signalwellenabschnitte verwendet werden, deren Abschnittsbreite durch die Breite der Impulse eines Impulsgenerators (1) bestimmt werden.

5. Verfahren nach Anspruch 4, **dadurch gekennzeichnet, dass** während des Kalibrierzyklus ein Impuls des Impulsgenerators (1) mit dem Zeittor (18) am Ausgang der Verzögerungsschaltung (10) verglichen wird.

6. Verfahren nach Anspruch 4, **dadurch gekennzeichnet, dass** im Empfangsteil (8) mit dem Zeittor (18) ein dem Kalibrierimpuls (τ0 bis τ9) entsprechender Signalswellenabschnitt erzeugt wird, der mit einem in den Empfangsteil (8) unmittelbar eingekoppelten Kalibrierimpuls verglichen wird.

7. Verfahren nach einem der Ansprüche 1 bis 6, **dadurch gekennzeichnet, dass** von den im Intervall zwischen zwei Messimpulsen (A, B) liegenden Kalibrierimpulsen (τ0 bis τ9) jeweils nur einer verwendet wird und die anderen Kalibrierimpulse (τ0 bis τ9) abgeblockt werden.

8. Entfernungsmesseinrichtung mit einem Sendeteil (5) für elektromagnetische Strahlung, insbesondere Radarstrahlung, das einen Impulsgenerator (1) zur Erzeugung von Messimpulsen (A, B) und eine Sendeantenne (4) aufweist und einem Empfangsteil (8), das eine Empfangsantenne (14) und eine einstellbare Verzögerungsschaltung (10) zum Einstellen eines Zeittores (18) für den Empfang von Echoimpulsen vor der Aussendung eines nächsten Messimpulses durch das Sendeteil (5) aufweist, **dadurch gekennzeichnet, dass** der Impulsgenerator (1) Impulse mit einer Wiederholfrequenz erzeugt, die einem Vielfachen der Impulswiederholfrequenz der Messimpulse entspricht, dass in einem in größeren Zeitabständen eingeschalteten Kalibrierzyklus mit Impulsen des Impulsgenerators (1) gesteuert durch das Sendeteil (5) Kalibrierimpulse (τ0 bis τ9) produzierbar sind, dass durch eine Kurzschlusskopplung (16, 15; 17) die Kalibrierimpule (τ0 bis τ9) von dem Empfangsteil (8) unmittelbar empfangbar sind und dass eine Auswertungseinrichtung (13, 17) für die zeitliche Übereinstimmung von Zeittor (18) und Kalibrierimpuls (τ0 bis τ9) vorgesehen ist.

9. Entfernungsmesseinrichtung nach Anspruch 8, **dadurch gekennzeichnet, dass** der Ausgang des Impulsgenerators (1) mit einem ersten Eingang und der Ausgang der Verzögerungsschaltung (10) mit einem zweiten Eingang einer Vergleichsstufe (17) verbunden sind.

10. Entfernungsmesseinrichtung nach Anspruches 8, **dadurch gekennzeichnet, dass** der Ausgang des Impulsgenerators (1) im Sendeteil (5) einen Sendeschalter (3) zur Durchschaltung einer Hochfrequenzwelle eines Oszillators (6) mit den Kalibrierimpulsen (τ0 bis τ9) steuert, dass die Verzögerungsschaltung (10) mit dem aus einem Messimpuls (A, B) generierten Zeittor (18) einen Empfangsschalter (12) zur Durchschaltung der Hochfrequenzwelle des Oszillators (6) steuert und dass die beiden durchgeschalteten Hochfrequenzwellen auf zwei Eingänge einer Vergleichseinrichtung (13) gelangen.

11. Entfernungsmesseinrichtung nach einem der Ansprüche 8 bis 10, **gekennzeichnet dadurch, daß** die Kurzschlusskopplung einen bedämpfften Kopplungsweg (16, 15) zwischen Sendeteil (5) und Empfangsteil (8) aufweist.

12. Entfernungsmesseinrichtung nach einem der Ansprüche 8 bis 11, **gekennzeichnet durch** einen mit einer gegenüber der Frequenz der Messimpulse (A, B) mit einer vielfachen Frequenz arbeitenden Impulsgenerator (1) und eine einstellbare Maskierungsschaltung, die im Intervall zwischen den Messimpulsen (A, B) jeweils nur einen der Kalibrierimpulse (τ0 bis τ9) durchlässt.

## Claims

1. A method for standardizing a distance measuring device in which a transmitter part (5) for electromagnetic radiation, in particular radar radiation, emits measurement pulses (A, B) which are controlled by a pulse generator (1), and a receiver part (8) is switched, after a specific adjustable delay (T_{DELAY}) before the emission of a subsequent measurement pulse, to a ready-to-receive state for the reception of an echo pulse during a time gate (18), **characterized in that** the pulse generator (1) produces pulses which are a multiple of the pulse repetition rate of the measurement pulses, **in that** a standardization cycle is carried out at relatively long time intervals by producing standardization pulses (τ0 to τ9) by means of the transmitter part (5) under the control of pulses generated by the pulse generator (1), **in that** the standardization pulses (τ0 to τ9) can be received directly in the receiver part (8), and **in that** the delay (T_{DELAY}) in the receiver part (8) is set in such a way that a generated standardization pulse (τ0 to τ9) is received by the receiver part (8) directly during a time gate (18).

2. The method as claimed in claim 1, **characterized in that** a standardization pulse (τ0 to τ9) is compared chronologically with the time gate (18) at the output of a delay circuit (10) in the receiver part (8).

3. The method as claimed in claim 1 or 2, **characterized in that** the width of the time gate (18) is set in accordance with the duration of a standardization pulse (τ0 to τ9).

4. The method as claimed, in one of claims 1 to 3, **characterized in that** high-frequency signal wave sections, whose section widths are determined by the width of the pulses of a pulse generator (1), are used as measurement pulses (A, B).

5. The method as claimed in claim 4, **characterized in that** a pulse of the pulse generator (1) is compared with the time gate (18) at the output of the delay circuit (10) during the standardization cycle.

6. The method as claimed in claim 4, **characterized in that** a signal wave section which corresponds to the standardization pulse (τ0 to τ9) and is compared with a standardization pulse fed directly into the receiver part (8) is'generated in the receiver part (8) with the time gate (18).

7. The method as claimed in one of claims 1 to 6, **characterized in that** in each case only one of the standardization pulses (τ0 to τ9) which are located in the interval between two measurement pulses (A, B) is used and the other standardization pulses (τ0 to τ9) are blocked.

8. A distance measuring device having a transmitter part (5) for electromagnetic radiation, in particular radar radiation, which has a pulse generator (1) for generating measurement pulses (A, B) and a transmission antenna (4), and a receiver part (8) which has a reception antenna (14) and an adjustable delay circuit (10) for setting a time gate (18) for the reception of echo pulses before the emission of a subsequent measurement pulse by the transmitter part (5), **characterized in that** the pulse generator (1) generates pulses with a repetition rate which corresponds to a multiple of the pulse repetition rate of the measurement pulses, **in that** standardization pulses (τ0 to τ9) can be produced by the transmitter part (5) in a standardization cycle which is switched on at relatively long time intervals, under the control of pulses of the pulse generator (1), **in that** the standardization pulses (τ0 to τ9) can be received directly by the receiver part (8) by means of a short-circuit coupling (16, 15; 17), and **in that** an evaluation device (13, 17) is provided for matching the timing of the time gate (18) and standardization pulse (τ0 to τ9).

9. The distance measuring device as claimed in claim 8, **characterized in that** the output of the pulse generator (1) is connected to a first input, and the output of the delay circuit (10) is connected to a second input of a comparator stage (17).

10. The distance measuring device as claimed in claim 8, **characterized in that** the output of the pulse generator (1) in the transmitter part (5) controls a transmission switch (3) for connecting through a high-frequency wave of an oscillator (6) with the standardization pulses (τ0 to τ9), **in that** the delay circuit (10) controls a reception switch (12) for connecting through the high-frequency wave of the oscillator (6) with the time gate (18) generated from a measurement pulse (A, B), and **in that** the two connected-through high-frequency waves arrive at two inputs of a comparator device (13).

11. The distance measuring device as claimed in one of claims 8 to 10, **characterized in that** the short-circuit coupling has an attenuated coupling path (16, 15) between the transmitter part (5) and receiver part (8).

12. The distance measuring device. as claimed in one of claims 8 to 11, **characterized by** a pulse generator (1) which operates with a frequency which is a multiple of the frequency of the measurement pulses (A, B), and an adjustable marking circuit which transmits in each case only one of the standardization pulses (τ0 to τ9) in the interval between the measurement pulses (A, B).

## Revendications

1. Procédé pour calibrer un dispositif télémétrique, dispositif dans lequel une partie émettrice (5) pour un rayonnement électromagnétique, en particulier un rayonnement radar, émet des impulsions de mesure (A, B) pilotées par un générateur d'impulsions (1), et une partie réceptrice (8) est commutée pour être prête à recevoir pour la réception d'une impulsion écho pendant un portail temporel (18) après un certain temps de retard (T_{DELAY}) réglable, avant l'émission d'une nouvelle impulsion de mesure, **caractérisé en ce que** le générateur d'impulsions (1) produit des impulsions avec un multiple de la fréquence de récurrence des impulsions de mesure, **en ce qu'**à des intervalles de temps relativement grands on effectue un cycle de calibrage en produisant sous le pilotage de la partie émettrice (5) des impulsions de calibrage (τ0 à τ9) avec des impulsions produites par lè générateur d'impulsions (1), **en ce que** les impulsions de calibrage (τ0 à τ9) sont capable d'être directement reçues dans la partie réceptrice (8), et **en ce que** le temps de retard (T_{DELAY}) est ajusté dans la partie réceptrice (8) de façon qu'une impulsion de calibrage générée (τ0 à τ9) soit reçue par la partie réceptrice (8) juste pendant un portail temporel (18).

2. Procédé selon la revendication 1, **caractérisé en ce qu'**on compare temporellement une impulsion de calibrage (τ0 à τ9) avec le portail temporel (18) dans la partie réceptrice (8) à la sortie d'un circuit de retard (10).

3. Procédé selon la revendication 1 ou 2, **caractérisé en ce qu'**on règle la largeur du portail temporel (18) en correspondance avec la durée d'une impulsion de calibrage (τ0 à τ9).

4. Procédé selon l'une des revendications 1 à 3, **caractérisé en ce qu'**on utilise comme impulsions de mesure (A, B) des tronçons d'onde de signal à haute fréquence, la largeur des tronçons étant déterminée par la largeur des impulsions d'un générateur d'impulsions (1).

5. Procédé selon la revendication 4, **caractérisé en ce que** pendant le cycle de calibrage on compare une impulsion du générateur d'impulsions (1) avec le portail temporel (18) à la sortie du circuit de retard (10).

6. Procédé selon la revendication 4, **caractérisé en ce que** dans la partie réceptrice (8) on produit avec le portail temporel (18) un tronçon d'onde de signal correspondant à l'impulsion de calibrage (τ0 à τ9) et on compare ce tronçon avec une impulsion de calibrage directement injectée dans la partie réceptrice (8).

7. Procédé selon l'une des revendications 1 à 6, **caractérisé en ce qu'**on n'utilise chaque fois qu'une seule des impulsions de calibrage (τ0 à τ9) se trouvant dans l'intervalle entre deux impulsions de mesure (A, B), et on bloque les autres impulsions de calibrage (τ0 à τ9).

8. Dispositif télémétrique comprenant une partie émettrice (5) pour un rayonnement électromagnétique, en particulier un rayonnement radar, laquelle comporte un générateur d'impulsions (1) pour produire des impulsions de mesure (A, B) et une antenne émettrice (4), et une partie réceptrice (8) comportant une antenne réceptrice (14) et un circuit de retard (10) réglable pour régler un portail temporel (18) pour la réception d'impulsions écho préalablement à l'émission d'une impulsion de mesure suivante par la partie émettrice (5), **caractérisé en ce que** le générateur d'impulsions (1) produit des impulsions avec une fréquence de récurrence qui correspond à un multiple de la fréquence de récurrence des impulsions de mesure, **en ce que** dans un cycle de calibrage enclenché à intervalles de temps relativement grands, il est possible de produire des impulsions de calibrage (τ0 à τ9) avec les impulsions du générateur d'impulsions (1) sous le pilotage de la partie émettrice (5), **en ce que** par un couplage en court-circuit (16, 15 ; 17) la partie réceptrice (8) peut recevoir directement les impulsions de calibrage (τ0 à τ9), et **en ce qu'**il est prévu un dispositif de traitement (13, 17) pour la concordance temporelle entre portail temporel (18) et impulsion de calibrage (τ0 à τ9).

9. Dispositif télémétrique selon la revendication 8, **caractérisé en ce que** la sortie du générateur d'impulsions (1) est reliée à une première entrée d'un étage comparateur (17) et la sortie du circuit de retard (10) est reliée à une deuxième entrée de l'étage comparateur (17).

10. Dispositif télémétrique selon la revendication 8, **caractérisé en ce que** la sortie du générateur d'impulsions (1) pilote dans la partie émettrice (5) un commutateur d'émission (3) pour la transmission d'une onde à haute fréquence d'un oscillateur (6) avec les impulsions de calibrage (τ0 à τ9), **en ce que** le circuit de retard (10) pilote avec le portail temporel (18) généré à partir d'une impulsion de mesure (A, B) un commutateur de réception (12) pour la transmission de l'onde à haute fréquence de l'oscillateur (6), et **en ce que** les deux ondes à haute fréquence transmises arrivent à deux entrées d'un dispositif comparateur (13).

11. Dispositif télémétrique selon l'une des revendications 8 à 10, **caractérisé en ce que** le couplage en court-circuit comprend un trajet de couplage amorti (16, 15) entre partie émettrice (5) et partie réceptrice (8).

12. Dispositif télémétrique selon l'une des revendications 8 à 11, **caractérisé par** un générateur d'impulsions (1) travaillant à une fréquence multiple de la fréquence des impulsions de mesure (A, B) et par un circuit de masquage réglable, qui ne laisse passer chaque fois qu'une seule des impulsions de calibrage (τ0 à τ9) dans l'intervalle entre les impulsions de mesure (A, B).
